# EUROPEAN PATENT SPECIFICATION

(11) **EP 3 304 984 B1**
(45) Date of publication and mention of the grant of the patent: **02.12.2020**
(21) Application number: 16817198.1
(22) Date of filing: 23.06.2016
(51) Int. Cl.: H04W 48/20, H04W 74/00, H04W 74/08

(54) **BEAM DETECTION, BEAM TRACKING AND RANDOM ACCESS IN MM-WAVE SMALL CELLS IN HETEROGENEOUS NETWORK**
STRAHLDETEKTION, STRAHLVERFOLGUNG UND DIREKTZUGRIFF IN KLEINEN MM-WAVE-ZELLEN IN EINEM HETEROGENEN NETZWERK
DÉTECTION DE FAISCEAU, SUIVI DE FAISCEAU ET ACCÈS ALÉATOIRE DANS DES PETITES CELLULES À ONDES MM DANS UN RÉSEAU HÉTÉROGÈNE

(30) Priority: 02.07.2015 US 201514791112
(43) Date of publication of application: 11.04.2018
(73) Proprietor: Huawei Technologies Co., Ltd., Longgang District Shenzhen, Guangdong 518129 (CN)
(72) Inventor: LIU, Bin, San Diego, California 92127 (US)
(74) Representative: Thun, Clemens
(86) International application number: PCT/CN2016/086943
(87) International publication number: WO 2017/000834

(56) References cited:
- WO-A1-2014/040558
- WO-A1-2014/181441
- CN-A- 104 105 159
- TW-A- 201 507 524
- US-A1- 2010 322 227
- US-A1- 2012 182 895
- US-A1- 2015 010 105
- US-A1- 2015 092 676

## Description

### TECHNICAL FIELD

The present invention relates generally to a system and method for beam detection or beam traction, and, in particular embodiments, to a system and method for beam selection or beam traction in a mm-wave (millimeter wave) small cell in a heterogeneous network.

### BACKGROUND

It is anticipated that the next generation of wireless communication systems (5G) will need to deliver 100-1000 times more capacity than current 4G systems (e.g., LTE or WiMAX) to meet the expected growth in mobile traffic. Existing approaches to increase spectral efficiency are unlikely to meet this explosive demand in wireless data. Current 4G systems use a variety of advanced techniques including Orthogonal Frequency Division Multiplexing (OFDM), Multiple Input Multiple Output (MIMO), multi-user diversity, spatial division multiple access (SDMA), higher order modulation, advanced coding, and link adaptation to virtually eliminate the difference between theoretical limits and practical achievements. Accordingly, newer techniques like carrier aggregation and higher order MIMO may only provide only modest improvement in spectral efficiency. One strategy for increasing the capacity that has worked well in the past is the use of smaller cells.

For example, US 2015/0092676A1 refers to a system and method using mm wave superspots to download high volumes of data to a moving or stationary mobile device traveling along a travel route that the moving mobile device is traveling. A macrocell in communication with the mobile device may predict the route that the mobile device is traveling, such as via GPS location, moving speed and direction, map information, etc. Alternatively, the route being taken may be determined by wireless communication, such as between the mobile device and a macrocell and/or superspot. The macrocell and/or superspot may determine whether (1) there are any mm-wave superspots along the predicted or known route that the mobile device is taking; (2) there is any data that is requested or remaining to download to the moving mobile device; and/or (3) the received signal quality, channel conditions, and/or macrocell traffic to the mobile device are favorable for superspot downloading.

Another strategy for increasing the capacity is to extend frequency to the mm-wave (millimeter wave) band. In the mm-wave band, a very high data rate can be enabled by utilizing wide frequency bands (e.g., 1GHz band). However mm-wave bands suffer from severe path loss, which makes beam-forming technology a must in mm-wave communication. In mm-wave systems, due to the short wave length, a large scale antenna array can be implemented, such that a narrow beam with high antenna gain can be formed to overcome the path loss. Detecting the right beam between mm-wave eNB (evolved node B) and UE (user equipment) consumes large signaling and time overhead.

### SUMMARY

The above mentioned problem is solved by the subject matter of the independent claims. A further implementation form is provided in the dependent claims.

### BRIEF DESCRIPTION OF THE DRAWINGS

For a more complete understanding of the present invention, and the advantages thereof, reference is now made to the following descriptions taken in conjunction with the accompanying drawings, in which:
Figure 1 shows a method for beam detecting and beam tracking in a heterogeneous network according to an embodiment; and
Figures 2a-2c show different stages of connections in a heterogeneous network comprising a macro node, small cell nodes and an UE according to an embodiment.

### DETAILED DESCRIPTION OF ILLUSTRATIVE EMBODIMENTS

Before establishing communication between the mm-wave eNB (Evolved Node B) and the UE, the beam direction needs to be identified either in the mm-wave eNB or in both the mm-wave eNB and the UE. Conventional procedures for detecting and tracking beams in mm-wave cells require extensive beam training or blind detecting which in turn result in a large sounding overhead.

Embodiments of the present invention provide a method and a system for beam detection, beam identification, and beam selection in a mm-wave small cell of a heterogeneous network (HetNet). The method may significantly reduce the overhead of the UE initial access to the small cell eNB such as the mm-wave eNB. Embodiments of the present invention further provide a method and a system for establishing and maintaining the communication (e.g., data link) between the small cell eNB and the UE by beam identification and beam tracking. Embodiments of the invention may employ the support of a macro eNB for beam detection, beam selection or beam tracking. Other embodiments of the invention provide access of the UE to a small cell eNB in a HetNet with the aid of the macro eNB.

Advantages of these embodiments are that they reduce the beam detection overhead (time and signaling) in small cells such as mm-wave cells. It further enables contention-free random access for the UE in the mm-wave cell, avoids beam conflict between different UEs in the mm-wave cell and provides an efficient way of beam tracking for the UEs to maintain communication with the small cell eNB.

The heterogeneous networks (HetNet) may comprise of macro cells and mm-wave small cells. A macro cell is a cell in a mobile phone network that provides radio coverage served by a high power cellular base station (macro eNB) over a wide area range such as a few tens of kilometers. Generally, macro cells provide coverage larger than the small cells. Macro cell base stations (macro nodes) have power outputs of typically tens of watts. Small cells are low-powered radio access nodes that operate in licensed and unlicensed spectrum that have a range of 10 meters to 1 or 2 kilometers. With mobile operators struggling to support the growth in mobile data traffic, many are using mobile traffic offloading as a more efficient use of radio spectrum. Small cells are a vital element to data offloading, and many mobile network operators see small cells as vital to managing the spectrum more efficiently compared to using just macro cells.

Macro cells may be high power low frequency macro cells and small cells may be low power high frequency small cells such as mm-wave small cells. The macro cells may be operated by a 3G, 4G or 5G network.

Before communication between a small cell (e.g., mm-wave) eNB and a UE is established the beam direction of both the UE and the mm-wave small cell eNB must be identified in some embodiments.

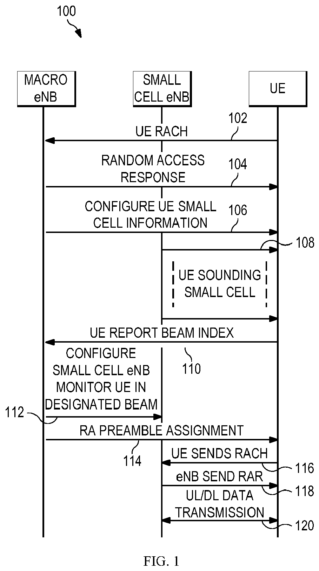

Figure 1a shows a method 100 for beam detecting and beam tracking in a heterogeneous network.

In steps 102 and 104 the UE performs a random access procedure in a macro cell, i.e., between a macro eNB (macro node) and an UE according to a legacy procedure such as a random access procedure in a 3G network or a 4G network. For example, the UE initiates the random access procedure to the macro cell eNB (macro cell node) by sending a random access signal, e.g., a Random Access Channel (RACH) preamble on the physical random access channel (PRACH) of the macro cell at a resource (e.g., timing, frequency, beam, etc.). In response, the macro eNB sends a random access response signal, a random access response, to the UE on the physical downlink shared channel (PDSCH) of the macro cell at a resource so that the UE can communicate with the macro eNB.

In step 106 the macro eNB provides the UE with general configuration information of the small cell, e.g., mm-wave small cell. In some embodiments the macro eNB provides the UE with reference signal information (e.g., number of reference signals, a reference signal set, etc.) of the small cell and the information of the beams (e.g., number of beams, beam index, etc.) sent out by the small cell. The UE may obtain rough timing information of the small cell eNB (small cell node) based on the timing information of macro cell or whether a reference signal (synchronization signal) was sent out. In various embodiments the macro eNB provides the UE with general configuration information of a plurality of (neighboring) small cells.

In some embodiments the macro eNB sends a broadcast signal with configuration information of the small cell eNB to the UE on the physical broadcast channel (PBCH) of the macro cell. In other embodiments the macro eNB prompts the small cell eNB to provide the UE with the small cell configuration information. For example, the UE can obtain the information (broadcast signal) via the PBCH channel of the small cell from the small cell eNB. The macro eNB may perform the steps 102 and 104 at the same time or before the UE receives the small cell configuration information.

In step 108 the small cell eNB sends reference signals or downlink synchronization signals periodically in all beams. The beams at the small cell eNB may be formed by an antenna array with a large number of antenna elements. In some embodiments the small wavelengths of mm-wave frequencies may facilitate the use of a large number of antenna elements in a compact form. The large number of antenna elements may synthesize and form highly directional beams corresponding to large array gains. The beams may focus the transmission and reception of the signals in directions and the UE may connect to a desired direction in order to overcome unfavorable path loss.

The small cell eNB may form N beams. In some embodiments the reference signals may be sent in N time slots when the wireless network operates in the time division modulation (TDM) mode. In each time slot, reference signal is sent in one beam direction. The UE may detect the reference signals for the different beams in N (e.g., continuous) time slots and may determine the small cell beam index for each of the N beams. The UE may rank the beams according to their signal quality (e.g., signal-noise-ration (SNR), reference signal received power (RSRP) or reference signal received quality (RSRQ)).

In step 110 the UE detects one or more of the small cell beams and feeds back (e.g., reports) the favorable beams (e.g., those with the best SNR, RSRP or RSRQ) by sending time stamps (slot indices) and the small cell index or small cell indices (if there is more than one small cell) to the macro eNB. In case the small cell eNB can form more than one beam simultaneously and send the reference signal in different beam direction simultaneously, the UE also reports beam index (indices) along with time stamp and small cell index. In some embodiments, UE may only report the beams with good or the best quality (only one) to the macro eNB. In various embodiments the UE may report the channel quality indicator (CQI) information together with time indices in the uplink control channel (e.g., PUCCH).

In step 112 the macro eNB configures the small cell eNB so that the small cell eNB listen to the UE in a designated beam (RX beam) or designated beams in a designated time slot. For example, the macro eNB notifies the small cell eNB to be prepared to receive a detect signal from the UE in a designated time slot for a corresponding beam. The corresponding beam may be the beam with the best quality (e.g., best receiver SNR, RSRP or RSRQ) for the UE. The small cell eNB will listen in this designated time slot for the access detect signal (RACH) to be sent by the UE.

In step 114 macro eNB allocates the time slot and RACH preamble sequence to the UE for random access to small cell eNB.

In step 116 the UE then sends a random access detect signal (e.g., RACH preamble) on the PRACH of the small cell to the small cell eNB in the dedicated time slot assigned by the macro eNB in step 114. In step 118 the small cell eNB sends a random access response signal to the UE in the designated beam. The random access response (RAR) is sent in the downlink of the allocated beam in PDSCH channel.

In various embodiments when more than one UE are allocated to a single beam, the macro eNB will make sure a contention-free access. For example, if two UEs are allocated to the same beam, the macro eNB will allocate different time slots or different RACH preambles for each UE for random access. Alternatively, the macro eNB can simply reallocate one of the UEs to another beam. In the final step, step 120, the small cell eNB and the UE exchange uplink or downlink data.

In some embodiments the heterogeneous wireless network of method 100 may operate in the code division modulation (CDM) mode. In this embodiment steps 102 to 106 are performed as described above. In step 108, however, the small cell eNB sends reference signals or downlink synchronization signals periodically in all beams. The reference signals may be sent in N orthogonal codes as beam signatures. Each beam has a unique orthogonal code with length N. The synchronization signatures may be Zadoff-Chu sequences or other orthogonal sequences. The small cell eNB may send out the reference signals simultaneously.

The UE may detect the reference signals by decoding the different codes and determining the beam index for each of the N beams. The UE then determines the beams with the favorable signal quality (e.g., SNR, RSRP or RSRQ) for the respective small cell and reports, in step 110, these favorable beams by sending beam indices (or beam index when only one favorable beam is reported) and small cell index or small cell indices to the macro eNB. In some embodiments, UE may only report the beams with good or the best quality to the macro eNB.

Steps 112 to 120 are performed similarly to the method in the TDM mode. However, if more than one UE are allocated to the same beam, the macro cell eNB will assign different signatures to each UE for RACH.

In some embodiments the heterogeneous wireless network of method 100 may operate in the frequency division modulation (FDM) mode. In this embodiment steps 102 to 106 are performed as described above. In step 108, however, the small cell eNB sends reference signals or downlink synchronization signals periodically in different resource blocks (e.g., (physical resource block (PRB)). Different beams are identified by different reference signals or synchronization signals. Different digital beam-forming (corresponding to different beam directions) is performed for each resource block. The small cell eNB may send out the reference signals simultaneously. The UE then detects and determines the beams (resource blocks) with the favorable quality (e.g., SNR, RSRP or RSRQ) and reports, in step 110, the quality of the beams by sending an index of the resource block with corresponding CQI to the macro eNB.

In some embodiments, UE may only report the beams with good or the best quality to the macro eNB. In some embodiments the UE may conduct small cell beam detection periodically when in Idle mode or Connected mode. The UE may monitor small cell downlink periodically for different (or all) beams. The different beams may be beams earlier identified as good quality beams. Once a better beam is identified by the UE, UE may feed-back the small cell beam index and time stamp (TDM mode), the beam signature index (CDM mode) or the resource block index (FDM mode) of this better beam together with the CQI information to the macro eNB node. The macro eNB node may coordinate beam switching with the small cell eNB to maintain and track the data link between the small cell eNB and the UE. Coordinating the beam-switching may mean that the macro eNB node assigns a new beam to the UE by notifying both the small cell eNB and the UE.

In some embodiments the macro eNB may coordinate access to the small cell such that a contention-free access of several UEs can be achieved. For example, in the case where multiple UEs want to access the same small cell beam, macro eNB can assign an orthogonal resource (in time, frequency or code domain) to each UE to send RACH to avoid contention.

In some embodiments the macro eNB may coordinate access to the small cell such that traffic congestion can be alleviated. For example, beam confliction can be avoided by silencing the reference signal sent by small cell eNB in a beam direction that is already occupied with one or more UEs. The macro eNB can instruct the small cell eNB to stop sending the downlink reference signal in the occupied beam as long as this beam is busy with a UE. Alternatively, the reference signal of an occupied beam may be a changed reference signals such the UEs know that this beams is already occupied. Therefore, the UEs may avoid access to these beams.

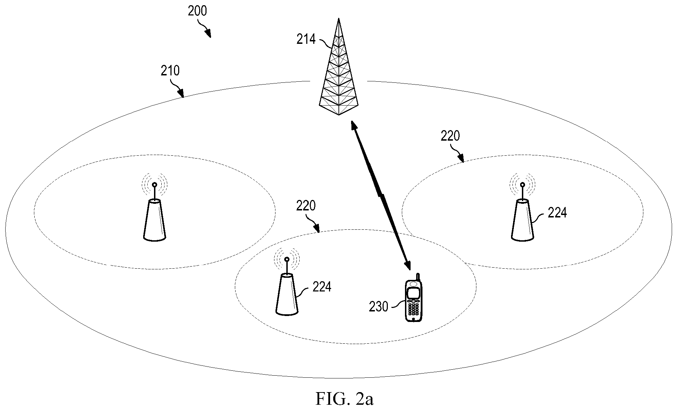

Figures 2a-2c show a heterogeneous network (HetNet) 200 with a macro cell 210 and small cells 220 such as mm-wave cell. The macro cell base station 214 (e.g., macro cell eNB) covers the macro cell 210 and the small cell base station 224 (e.g., small cell eNB) covers the small cell 220. The macro cell 210 covers a plurality of (neighboring) small cells 220. Figure 2a shows how the UE 230 sets up initial communication with the macro cell base station 214. The initial communication may be performed by steps 102106 of the embodiment of Figure 1 including providing the UE with general configuration information of the small cells 220 by the macro eNB 214.

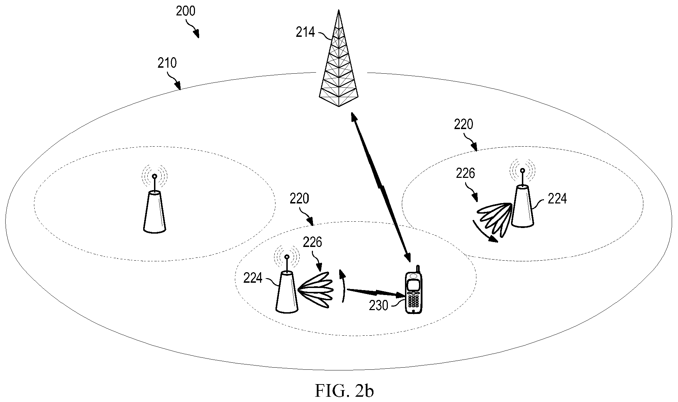

Figure 2b shows how the UE 230 detects, determines and evaluates the beams 226 of the small cell base station(s) 224 and how the UE 230 reports the quality of the beams 226 to the macro cell base station 214. This may be performed by steps 108-120 of the embodiment of Figure 1. The small cell eNBs 224 may send reference signals periodically in beams. The UE detects the small cell beams from the plurality of small cells 220 and feeds back the favorable beams by sending time stamps and small cell indices to the macro eNB 214, for example. The macro eNB 214 configures one of the small cell eNB 224 so that the small cell eNB 224 listens to the UE in a designated beam (based on the most favorable beam) and a designated time slot. A connection is established by exchanging access signals in the designated beam and time slot by the UE. In some embodiments a connection is established between several beams and the (single) small cell eNB 224. Alternatively, the macro eNB 214 configures several (e.g., two or more (neighboring)) small cell eNBs 224 so that these small cell eNBs 224 listen to the UE 230 in designated beams and designated time slots. A connection between the UE and several beams of two or more neighboring small cell eNBs 224 is established by exchanging access signals in designated beams and time slots.

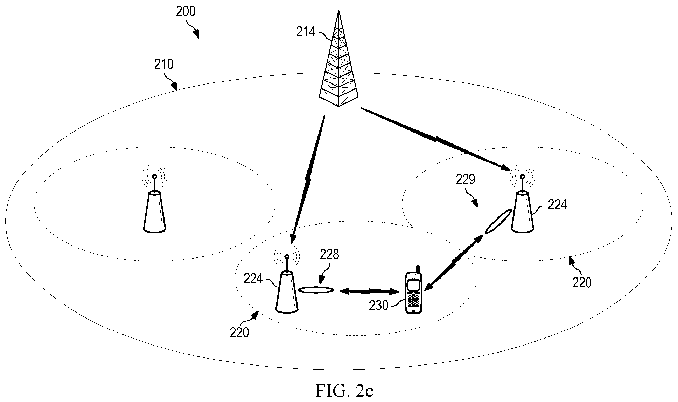

Figure 2c shows how the macro cell base eNB 214 configures the small cell eNBs 224 and how the UE 230 and the small cell eNBs 224 communicate on a designated beam 228 or 229 with the assistance of the macro cell base station 214. Figure 2c shows how the macro cell eNB 214 coordinates beam switching (beam tracking) for a UE 230 between two neighboring small cell eNBs 224 in order to maintain a good communication link for the UE 230. If the quality of the beam 228 over which the UE 230 communicates deteriorates or if the UE 230 finds a better quality beam 229 than beam 228 the UE 230 is currently communicating, the UE 230 may want to switch to the better quality beam. The UE 230 may continuously or as needed monitor and measure other beams and report best quality beams to the macro cell eNB 214. If a better beam is found the macro eNB 214 may assign the better beam to the UE 230, for example, by assigning the beam 229 to the UE. The access procedure may be performed as described with respect to steps 112-120 in the embodiment of Figure 1. In some embodiment the assigned beam 229 may belong to a different small cell eNB 224 (e.g., a neighboring eNB).

The beam switching procedure may be performed within the same small cell or between adjacent small cells. In various embodiments the UE may switch a plurality of beams (i.e., not only one beam) at the same time. In other embodiment the UE switches some beams but keeps some beams within the same small cell or between different small cells.

In some embodiments not only the small cell eNB forms beams but also the UE can form beams. The beams at the UE may be formed with an antenna array having a couple of antenna elements. As with the small cell eNB, the antenna elements of the UE may synthesize and form highly directional beams. The beams may focus the transmission and reception of the signals in directions of the small cell eNB. The UE identifies a good or best beam in small cell eNB as well as in UE. Thus it will take more time for UE to complete beam detection. For example, if the UE can form M beams and small cell eNB can form N beams, it will take NxM time slots in the TDM mode for the UE to complete the detection in some embodiments.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A method for providing a data link between a small cell node and a user equipment, UE, in a heterogeneous wireless network, the method being executed by the small cell node, the method comprising:
• sending reference signals in downlink to the UE, each reference signal being allocated to a different beam (step 108);
• receiving an assignment from a macro cell node for monitoring an access signal, wherein the assignment for monitoring the access signal comprises an assignment for monitoring a reception of the access signal in a designated beam among the different beams and in a designated time slot (step 112);
• monitoring the reception of the access signal in the designated time slot and in the designated beam, and detecting the reception of the access signal from the UE in the designated time slot and in the designated beam (step 116); **characterized by** the method further comprising:
• receiving an instruction from the macro cell node, wherein the instruction indicates that the small cell node is to stop sending a reference signal on the designated beam as long as the designated beam is occupied by the UE to avoid access requests received at the small cell node from new UEs on the designated beam,
• stopping sending the reference signal of the designated beam to avoid access requests from the new UEs on the designated beam as long as the UE occupies the designated beam.

2. The method according to claim 1, wherein the access signal is a random access detect signal.

3. A small cell node configured and intended to perform any of the methods according to claims 1 - 2.

## Patentansprüche

1. Verfahren zum Bereitstellen einer Datenverbindungsstrecke zwischen einem Kleinzellenknoten und einem Benutzergerät, UE, in einem heterogenen Drahtlosnetz, wobei das Verfahren durch den Kleinzellenknoten ausgeführt wird, wobei das Verfahren Folgendes umfasst:
• Senden von Referenzsignalen auf der Abwärtsstrecke an das UE, wobei jedes Referenzsignal einem anderen Strahl zugeteilt wird (Schritt 108);
• Empfangen einer Zuweisung von einem Makrozellenknoten zum Überwachen eines Zugriffssignals, wobei die Zuweisung zum Überwachen des Zugriffssignals eine Zuweisung zum Überwachen eines Empfangs des Zugriffssignals in einem designierten Strahl unter den anderen Strahlen und in einem designierten Zeitschlitz umfasst (Schritt 112);
• Überwachen des Empfangs des Zugriffssignals in dem designierten Zeitschlitz und in dem designierten Strahl, und Detektieren des Empfangs des Zugriffssignals von dem UE in dem designierten Zeitschlitz und in dem designierten Strahl (Schritt 116);
**dadurch gekennzeichnet, dass** das Verfahren ferner Folgendes umfasst:
• Empfangen einer Anweisung von dem Makrozellenknoten, wobei die Anweisung angibt, dass der Kleinzellenknoten Senden eines Referenzsignals auf dem designierten Strahl, solange wie der designierte Strahl durch das UE belegt ist, stoppen soll, um an dem Kleinzellenknoten empfangene Zugriffsanforderungen von neuen UEs auf dem designierten Strahl zu vermeiden,
• Stoppen des Sendens des Referenzsignals des designierten Strahls, um Zugriffsanforderungen von den neuen UEs auf dem designierten Strahl zu vermeiden, solange das UE den designierten Strahl belegt.

2. Verfahren nach Anspruch 1, wobei das Zugriffssignal ein Erstzugriffsdetektionssignal ist.

3. Kleinzellenknoten, dafür ausgelegt und dafür gedacht, eines der Verfahren gemäß Ansprüchen 1-2 durchzuführen.

## Revendications

1. Procédé pour fournir une liaison de données entre un nœud de petite cellule et un équipement utilisateur, UE, dans un réseau sans fil hétérogène, le procédé étant exécuté par le nœud de petite cellule, le procédé comprenant :
• l'envoi de signaux de référence en liaison descendante à l'UE, chaque signal de référence étant attribué à un différent faisceau (étape 108) ;
• la réception d'une allocation à partir d'un macro-nœud de cellule pour surveiller un signal d'accès, dans lequel l'allocation pour surveiller le signal d'accès comprend une allocation pour surveiller une réception du signal d'accès dans un faisceau désigné parmi les différents faisceaux et dans un intervalle de temps désigné (étape 112) ;
• la surveillance de la réception du signal d'accès dans l'intervalle de temps désigné et dans le faisceau désigné, et la détection de la réception du signal d'accès à partir de l'UE dans l'intervalle de temps désigné et dans le faisceau désigné (étape 116);
**caractérisé en ce que** le procédé comprend en outre :
• la réception d'une instruction à partir du macro-nœud de cellule, dans lequel l'instruction indique que le nœud de petite cellule doit arrêter l'envoi d'un signal de référence sur le faisceau désigné aussi longtemps que le faisceau désigné est occupé par l'UE pour éviter des demandes d'accès reçues au nœud de petite cellule à partir de nouveaux UEs sur le faisceau désigné,
• l'arrêt de l'envoi du signal de référence du faisceau désigné pour éviter des demandes d'accès provenant des nouveaux UEs sur le faisceau désigné aussi longtemps que l'UE occupe le faisceau désigné.

2. Procédé selon la revendication 1, dans lequel le signal d'accès est un signal de détection d'accès aléatoire.

3. Nœud de petite cellule configuré et prévu pour réaliser l'un quelconque des procédés selon les revendications 1 et 2.
